# EUROPÄISCHE PATENTSCHRIFT

(11) **EP 3 052 963 B1**
(45) Veröffentlichungstag und Bekanntmachung des Hinweises auf die Patenterteilung: **22.07.2020**
(21) Anmeldenummer: 14781066.7
(22) Anmeldetag: 29.09.2014
(51) Int. Cl.: G01S 19/40, G01C 21/30, G01S 19/49, G01C 21/20, G01S 19/50

(54) **VERFAHREN ZUR KORREKTUR VON POSITIONSDATEN UND KRAFTFAHRZEUG**
METHOD FOR CORRECTING POSITION DATA, AND MOTOR VEHICLE
PROCÉDÉ DE CORRECTION DE DONNÉES DE POSITION ET VÉHICULE AUTOMOBILE

(30) Priorität: 02.10.2013 DE 102013016435
(43) Veröffentlichungstag der Anmeldung: 10.08.2016
(73) Patentinhaber: Audi AG, 85045 Ingolstadt (DE)
(72) Erfinder: RIEDEL, Helmut, 86697 Oberhausen (DE); SPETH, Thomas, 85095 Denkendorf (DE); DORIC, Igor, 83301 Traunreut (DE); BRANDMEIER, Thomas, 93173 Wenzenbach - Irlbach (DE)
(74) Vertreter: Thielmann, Frank
(86) Internationale Anmeldenummer: PCT/EP2014/002639
(87) Internationale Veröffentlichungsnummer: WO 2015/049044

(56) Entgegenhaltungen:
- EP-A1- 2 019 382
- EP-A2- 1 006 367
- WO-A1-2009/098154
- DE-A1-102008 020 446
- DE-A1-102012 208 974
- JP-A- 2006 153 714
- US-A1- 2010 169 013

## Beschreibung

Die Erfindung betrifft ein Verfahren zur Korrektur von mit einem ein globales Navigationssatellitensystem nutzenden Positionssensor eines Kraftfahrzeugs aufgenommenen Positionsdaten sowie ein Kraftfahrzeug.

Globale Navigationssatellitensysteme sind bereits bekannt. Dabei werden von Satelliten Signale ausgesendet, die von einem Positionssensor empfangen und ausgewertet werden können. Empfängt der Positionssensor Signale mehrerer Satelliten, insbesondere von mindestens vier Satelliten, lässt sich aus der bekannten Position der Satelliten und der Uhrzeit eine Position des Positionssensors ermitteln. Ein bekanntes globales Navigationssatellitensystem (GNSS) ist das "Global Positioning System" (GPS).

Auch in Kraftfahrzeugen werden Positionssensoren globaler Navigationssatellitensysteme immer häufiger eingesetzt, um die aktuelle Position des Kraftfahrzeugs für verschiedene Anwendungen bestimmen zu können. Beispielsweise können Navigationssysteme die Positionsdaten nutzen, um das Kraftfahrzeug zu einem Zielort zu leiten oder Straßeneigenschaften an der aktuellen Position festzustellen. Auch auf der Kommunikation mit anderen Kraftfahrzeugen oder Infrastruktureinrichtungen basierende Systeme können derartige Positionsdaten nutzen (sogenannte Car2x-Anwendungen).

Möglichst exakte Positionsdaten von globale Navigationssatellitensysteme nutzenden Positionssensoren sind erwünscht, wobei jedoch aktuell in Kraftfahrzeugen verbaute Positionssensoren nur Positionsdaten einer Genauigkeit von beispielsweise 8 bis 12 m bei 95 % der Messungen aufweisen.

Dabei wird die Positionsgenauigkeit durch Messabweichungen bestimmt. Die von einem ein globales Navigationssatellitensystem nutzenden Positionssensor gelieferten Positionsdaten beinhalten eine Reihe von Fehlern. Die gravierendsten dieser Fehler lassen sich in sogenannte Common-Mode-Fehler, welche innerhalb einer bestimmten Region bei allen Positionssensoren auftreten, und Noncommon-Mode-Fehler, die vom Positionssensor oder der Empfangssituation abhängen, aufteilen. Zu den Common-Mode-Fehlern zählen dabei:
- Störung durch die Ionosphäre: die Ionosphäre beeinflusst die Ausbreitung von elektromagnetischen Wellen. Die Anzahl der Elektronen pro Quadratmeter (sogenannter "total electron content", TEC) ist abhängig von der Sonneneinstrahlung, so dass sich am Tag größere Fehler ergeben als nachts.
- Störung durch die Troposphäre: in Abhängigkeit vom Luftdruck und der Luftfeuchtigkeit ergeben sich Laufzeitunterschiede in der Troposphäre. Der verursachte Fehler ist abhängig vom Erhebungswinkel des sendenden Satelliten.
- Ephemeridenfehler: als Ephemeridendaten werden die Bahnen der Satelliten bezeichnet, die dem Nutzer als Navigationsdaten zur Verfügung gestellt werden. Die Abweichung dieser Daten zu den realen Satellitenbahnen wird als Ephemeridenfehler bezeichnet.
- Uhrenfehler der Satelliten: GPS-Satelliten senden neben ihren jeweiligen Navigationsdaten auch die Korrekturdaten für die Uhr. Die Differenz zur GPS-Zeit, die nach der Korrektur verbleibt, wird als Satellitenuhrenfehler bezeichnet.

Beispiele für Noncommon-Mode-Fehler sind:
- Mehrwegefehler: durch die Reflexion an Gebäudewänden, der Erdoberfläche oder Ähnlichem wird bei einer Pseudorange-Messung anstelle des direkten Signals gegebenenfalls die Überlagerung aus zwei oder mehreren Signalen korreliert. Dadurch verschiebt sich die Lage des Maximums der Korrelationsfunktion.
- Empfängerrauschen: hierunter werden durch thermisches Rauschen und Nichtlinearitäten der elektronischen Bauteile des Empfängers verursachte Messfehler zusammengefasst.

Zur Beseitigung der Common-Mode-Fehler wurden differentielle Verfahren vorgeschlagen, allgemein als DGNSS abgekürzt. Ein spezielles Beispiel hierfür ist das differentielle GPS (DGPS). Zur Realisierung dieser Verfahren wird eine Referenzstation vorgesehen, deren Position exakt bekannt ist. Durch die Referenzstation werden die Messfehler jeder Positionsmessung ermittelt und in Form von Korrekturdaten an die das globale Navigationssatellitensystem nutzenden Positionssensoren mit unbekannter Position versendet. Ephemeridenfehler und Uhrenfehler der Satelliten werden dadurch eliminiert. Durch die Troposphäre und Ionosphäre herbeigeführte Fehler werden mit wachsendem Abstand zwischen der Referenzstation und dem Positionssensor zu einem sinkenden Anteil kompensiert. Nichtsdestotrotz stellen die Common-Mode-Fehler den weitaus größeren Anteil an der Messabweichung dar und können durch differentielle Verfahren weitgehend beseitigt werden.

Nachteilig im Hinblick auf Automotive-Anwendungen sind dabei die hohen Kosten. Diese muss entweder ein Endnutzer aufbringen, indem er einen Satellitenreferenzdienst abonniert, oder aber Hersteller im Automotive-Bereich müssten die Referenzstationen realisieren, die die Korrekturdaten beispielsweise über Car2x-Kommunikation versenden.

DE 10 2008 020 446 A1 offenbart ein Verfahren zur Korrektur einer Position eines Fahrzeugs. Dazu wird eine erste Position eines markanten Punktes mittels einer Detektionseinheit erfasst, welche zur Korrektur einer mittels eines GPS-Empfängers gemessenen zweiten Position herangezogen wird. Markante Punkte können dabei insbesondere Unebenheiten auf der Fahrbahn mit charakteristischer Ausprägung sein, die beim Überfahren detektiert werden. Als markante Punkte werden ohnehin auf der Straße vorhandene Unebenheiten, wie Rampen, Gullideckel, Schotterstrecken, gepflasterte Straßenabschnitte oder die Straße querende Schienen vorgeschlagen.

Der Erfindung liegt daher die Aufgabe zugrunde, eine Möglichkeit zur kostengünstiger und aufwandsärmer realisierbaren Korrektur von Positionsdaten eines globalen Navigationssatellitensystems anzugeben.

Zur Lösung dieser Aufgabe sind bei einem Verfahren der eingangs genannten Art erfindungsgemäß die Merkmale des Anspruchs 1 vorgesehen.

Um die Genauigkeit bei der Positionsbestimmung in globalen Navigationssatellitensystemen zu steigern, wurde bei der diskutierten differentiellen Methode eine exakt vermessene Position benötigt, an der eine Messung vorgenommen wird, dort die Referenzstationen. Im Rahmen der vorliegenden Erfindung wurde nun erkannt, dass sich bei Kraftfahrzeugen der Vorteil bietet, dass mögliche Positionen durch das Straßennetz vorgegeben sind. Folglich sind keine Korrekturdaten von Referenzstationen notwendig, wenn infrastrukturelle, mechanische Wegmarken als Referenzpunkte herangezogen werden. Das bedeutet also, es werden mechanische Wegmarken als Referenz zur gemessenen Position verwendet.

Durch das Überfahren von Bodenstrukturen mit einem Kraftfahrzeug existiert eine mechanische Wechselwirkung mit den Bodenstrukturen, die bestimmte Signale in das Kraftfahrzeug einkoppelt und/oder Schallsignale erzeugt, die in die Umgebung abgegeben werden. Dabei entsteht eine für Bodenstrukturen typische Datensignatur, die in Messdaten von Struktursensoren aufgefunden werden kann, das bedeutet, es kann aus den Messdaten festgestellt werden, ob Bodenstrukturen überfahren werden und welche Datensignatur diese Bodenstrukturen aufweisen. So können Referenzstrukturen unter den Bodenstrukturen aufgefunden werden, deren Referenzpositionen im geodätischen Koordinatensystem, das das globale Navigationssatellitensystem nutzt, bekannt sind. Wird nun die Referenzposition mit den Positionsdaten, die zum Zeitpunkt des Überfahrens der Referenzstruktur mit dem Positionssensor aufgenommen wurden, verglichen, können Abweichungen festgestellt werden, mithin Korrekturdaten bestimmt werden, die insbesondere die beschriebenen Common-Mode-Fehler enthalten und auch im Folgenden noch eingesetzt werden können, um Positionsdaten des Positionssensors zu korrigieren. Das Kraftfahrzeug ermittelt also sozusagen durch Vermessung seiner Wechselwirkung mit dem Untergrund, auf dem es fährt, seine Korrekturdaten selbst, so dass diesbezüglich keine Kommunikation mit Referenzstationen mehr erforderlich ist.

Die Erfindung ermöglicht mithin eine präzise Positionsbestimmung, ohne dass lange (GPS) Messungen durchgeführt werden müssen. Es sind keine Korrekturdienste notwendig, so dass keine laufenden Gebühren entstehen. Gegenüber elektrischen Sendern, beispielsweise von Referenzstationen, weisen mechanische Wegmarken, also die Referenzstrukturen, den Vorteil auf, dass sie keine Spannungsversorgung benötigen und ein geringer Wartungsaufwand gegeben ist. Referenzstrukturen sind zudem manipulationssicher und deterministisch. Insgesamt werden also durch den mechanischen Kontakt zwischen Reifen und Untergrund positionsabhängig manipulierte Messdaten aufgenommen, in denen Referenzstrukturen als mechanische Wegmarken detektiert werden können, die zuvor exakt eingemessen wurden und deren Referenzposition dem Kraftfahrzeug bekannt ist, um Korrekturdaten zu ermitteln.

Dabei ist anzumerken, dass üblicherweise im Wesentlichen senkrecht zur Fahrtrichtung verlaufende Referenzstrukturen eingesetzt werden, insbesondere also senkrecht zum Verlauf der Fahrbahn verlaufende Referenzstrukturen, die mithin beim Überfahren eine genaue Ermittlung von Positionsdaten in Fahrtrichtung des Kraftfahrzeugs erlauben, jedoch nicht zwangsläufig eine Positionskalibrierung entlang des Verlaufs der Referenzstruktur, da rein aus den Messdaten nur bei einer besonderen Ausbildung der Referenzstruktur schlussfolgerbar wäre, wo entlang des Verlaufs der Referenzstruktur diese überfahren wurde. Hierfür wird, wie im Folgenden noch näher dargelegt wird, vorgeschlagen, räumlich nah beieinanderliegende Referenzstrukturen mit unterschiedlichen, insbesondere zueinander senkrechten Verlaufsrichtungen einzusetzen, beispielsweise in Kurven- oder Kreuzungsbereichen, oder aber die Position des Kraftfahrzeugs in Verlaufsrichtung der Referenzstruktur anderweitig festzustellen, wie im Folgenden noch näher erläutert werden wird. Allgemein kann also ein Kraftfahrzeug in der lateralen Position innerhalb der aktuellen Fahrspur variieren, was aber durch geschickte Wahl von Referenzstrukturen und/oder weitere Messungen ermittelt werden kann.

Zur konkreten Vermessung der mechanischen Wechselwirkung des Kraftfahrzeugs mit Bodenstrukturen beim Überfahren derselben sind verschiedene Möglichkeiten denkbar. So ist es zunächst möglich und erfindungsgemäß bevorzugt, dass als Struktursensor ein Körperschallsensor verwendet wird. Durch den Kontakt von Reifen mit dem Untergrund werden Vibrationen, also Körperschall, in das Kraftfahrzeug eingeleitet, die entsprechend vermessen werden können. Dafür kann der Körperschallsensor bevorzugt am Fahrzeugrahmen angeordnet sein, in den die Vibrationen über das Fahrwerk eingeleitet werden.

Ferner kann jedoch alternativ oder zusätzlich vorgesehen sein, dass als Struktursensor ein Beschleunigungssensor und/oder ein Mikrofon und/oder ein Federwegsensor verwendet werden. Ein Mikrofon nimmt den Schall auf, der durch die Wechselwirkung der Reifen mit dem Untergrund, also den Bodenstrukturen, entsteht und liefert entsprechende, auszuwertende Messdaten. Beschleunigungssensoren, die beispielsweise im Rahmen einer Inertialplattform ohnehin im Kraftfahrzeug vorgesehen sind, messen letztlich auch den Körperschall oder allgemein Stöße, so dass im Übrigen auch ein Beschleunigungssensor als Körperschallsensor eingesetzt werden kann. Schließlich sind auch Federwegsensoren, beispielsweise an der Reifenaufhängung, denkbar, die die Wechselwirkung der Reifen mit dem Untergrund beschreibende Messdaten aufnehmen können, beispielsweise beim Überfahren eines Bordsteins oder dergleichen auch die Fahrdynamik bezüglich der Wechselwirkung mit der Bodenstruktur aufnehmen.

Als Referenzstrukturen sind eine Vielzahl von mechanischen Wegmarken denkbar. So kann vorgesehen sein, dass als Referenzstruktur eine Anordnung von Querrillen in der Fahrbahnoberfläche verwendet wird. Ein Beispiel zur Erzeugung von Messdaten, durch die eine Referenzstruktur identifiziert werden kann, ist das Vorsehen von Querrillen in der Fahrbahn, welche in einer speziellen Weiterbildung der vorliegenden Erfindung eine signifikante Anordnung haben können, beispielweise also in den Messdaten einen Sinus-Sweep durch kleiner werdende Abstände zwischen den Querrillen erzeugen. Denkbar, aber nicht als erfindungsgemäß speziell erzeugte Referenzstrukturen, sondern allenfalls zusätzlich, ist es auch, bereits natürlich vorhandene Referenzstrukturen, wie einen Übergang zwischen unterschiedlichen Fahrbahnbelägen und/oder die Fahrbahn kreuzende Gleise und/oder Fahrbahnschwellen und/oder Brückenfugen und/oder eine Absenkung der Fahrbahnoberfläche, auszunutzen, beispielsweise den markanten Übergang zwischen zwei Fahrbahnbelägen, wie dem Übergang von Teerstraße zu Kopfsteinpflaster. Dann ergibt sich der Vorteil, dass keine Baumaßnahmen in der Infrastruktur notwendig sind. Bei einem solchen Übergang zwischen Fahrbahnbelägen kann auch eine Veränderung des Frequenzspektrums in den durch die mechanische Wechselwirkung erzeugten Vibrationen bzw. dem erzeugten Schall als Datensignatur untersucht werden. Bereits vorhandene Bahnübergänge, Straßenbahnschienen, Fahrbahnschwellen, Brückenfugen und dergleichen sind ebenfalls als nicht erfindungsgemäß speziell erzeugte, natürlich vorhandene Referenzstrukturen denkbar.

Insbesondere im Bereich langsamer Geschwindigkeiten kann die eine nicht der erfindungsgemäß speziell erzeugten Referenzstruktur entsprechende, natürlich vorhandene Referenzstruktur auch aus einer Absenkung im Fahrbahnbelag, beispielsweise einem Bordstein, bestehen. Hierbei können besonders zweckmäßig Messdaten eines vertikalen Beschleunigungssensors und/oder eines Federwegsensors ausgewertet werden.

Wesentlich für eine erfolgreiche und zielgerichtete Auswertung ist es dabei, dass im Kraftfahrzeug grundsätzlich bekannt ist, wann welche Referenzstrukturen detektiert werden können. Dabei ist darauf hinzuweisen, dass auch unkorrigierte Positionsdaten hinreichend genau angeben, wann ein Nahbereich um eine bestimmte Referenzstruktur erreicht wird. Mit besonderem Vorteil kann mithin vorgesehen sein, dass eine Detektion einer Referenzstruktur nur durchgeführt wird, wenn die Positionsdaten des Kraftfahrzeugs anzeigen, dass sich das Kraftfahrzeug in einem Nahbereich um die Referenzstruktur befindet. Ein derartiger Nahbereich kann beispielsweise eine Ausdehnung von 50 - 500 m um die Referenzstruktur aufweisen, so dass auch stärker abweichende unkorrigierte Positionsdaten hinreichend verlässlich ausgewertet werden können, um die Referenzstruktur rechtzeitig detektieren zu können. Steuert also das Kraftfahrzeug, dessen bereits korrigierte oder auch unkorrigierte Positionsdaten mithin eine Position im geodätischen Koordinatensystem angeben, so dass diese zumindest ungefähr bekannt ist, auf eine Referenzstruktur zu, kann eine zur Auswertung der Messdaten vorgesehene Auswerteeinheit in einen "Lauschmodus" geschaltet werden, mithin explizit eine Detektion der Referenzstruktur durchführen, sobald der Nahbereich um die Referenzstruktur erreicht ist. Die Auswerteeinheit wird dann sozusagen "scharf" geschaltet, und sucht konkret nach einer Datensignatur, die dem Überfahren des Referenzmusters entspricht. Wird die Referenzstruktur detektiert, können die aktuell gemessenen Positionsdaten, insbesondere wenigstens bezüglich der Fahrtrichtung, mit der hinterlegten exakten Referenzposition der Referenzstruktur synchronisiert werden. Dabei sei darauf hingewiesen, dass es selbstverständlich auch denkbar ist, mehrere Referenzstrukturen in den Messdaten zu suchen, wenn deren Nahbereiche überlappen.

Eine Weiterbildung der Erfindung sieht vor, dass die Referenzstruktur beschreibende Strukturdaten und die der Referenzstruktur zugeordnete Referenzposition ermittelt werden, insbesondere aus einem digitalen Kartenmaterial eines Navigationssystems des Kraftfahrzeugs und/oder aus von einer Kraftfahrzeug-zu-X-Kommunikationseinrichtung (Car2x-Kommunikationseinrichtung) empfangenen Kommunikationsdaten und/oder aus einer kraftfahrzeuginternen Datenbank. Die Strukturdaten sind letztlich geeignet, die Detektion der Referenzstruktur erst zu ermöglichen, nachdem eine Vielzahl unterschiedlicher Bodenstrukturen denkbar sind, von denen wenigstens die Referenzstruktur im Hinblick auf eine verlässliche Korrektur von Positionsdaten möglichst eindeutig, insbesondere wenigstens im Nahbereich, unterschieden werden muss. Mithin kann vorgesehen sein, dass die Strukturdaten bei der Detektion der Referenzstruktur aus den Messdaten berücksichtigt werden. Um aber überhaupt eine sinnvolle Detektion von Referenzstrukturen zu ermöglichen, müssen diese und ihre Referenzpositionen dem Kraftfahrzeug bekannt sein oder bekannt gemacht werden, wobei die vorliegende Erfindung mehrere Möglichkeiten in Betracht zieht. So kann beispielsweise digitales Kartenmaterial eines Navigationssystems, welches idealerweise auch regelmäßig aktualisiert wird, erweitert sein und Informationen darüber enthalten, wo eine Referenzstruktur zu finden ist. Beispielsweise können einem Straßenabschnitt ein Ort der Referenzstruktur entlang des Straßenabschnitts, die Strukturdaten und die Referenzposition zugeordnet werden. Dann müssen die Strukturdaten und die der Referenzstruktur zugeordnete Referenzposition lediglich aus dem Navigationssystem des Kraftfahrzeugs abgerufen werden. Eine weitere Möglichkeit, um für verschiedene Referenzstrukturen Strukturdaten und Referenzpositionen zu erhalten, ist die Kraftfahrzeug-zu-X-Kommunikation oder allgemein eine Kommunikationsverbindung, wobei beispielsweise aktuelle Listen von Referenzstrukturen, Strukturdaten und den Referenzstrukturen zugeordneten Referenzpositionen von einer zentralen Infrastruktur-Recheneinrichtung, beispielsweise einem Server, abgerufen und/oder regelmäßig versendet werden. Auf diese Art empfangene Kommunikationsdaten können auch zur Aktualisierung von digitalem Kartenmaterial eines Navigationssystems oder einer kraftfahrzeuginternen Datenbank genutzt werden, die eine weitere Möglichkeit darstellt, Referenzstrukturen zugeordnete Daten, konkret Strukturdaten und die der Referenzstruktur zugeordnete Referenzposition, im Kraftfahrzeug abzuspeichern. Selbstverständlich ist es auch denkbar, eine kraftfahrzeuginterne Datenbank ohne die Nutzung von Kraftfahrzeug-zu-X-Kommunikation zu realisieren, wobei eine derartige Datenbank dann beispielsweise während einer Wartung oder dergleichen aktualisiert werden kann.

Wie bereits erwähnt wurde, ist es besonders zweckmäßig, die Strukturdaten bei der Detektion der Referenzstruktur aus den Messdaten zu berücksichtigen. In diesem Kontext können die Strukturdaten mit besonderem Vorteil Signaturdaten und/oder Zuordnungsdaten zu einer Klasse von Referenzstrukturen umfassen, wobei jeder Klasse klassenspezifische Signaturdaten zugeordnet sind, wobei zur Detektion der Referenzstruktur die Signaturdaten mit den Messdaten verglichen werden. Wie bereits erwähnt, hinterlässt das Überfahren einer Bodenstruktur eine Datensignatur in den Messdaten, die genutzt werden kann, um die Bodenstruktur, hier konkret eine Referenzstruktur, zu detektieren. Um die Referenzstruktur zu identifizieren, können die Strukturdaten mithin in einer ersten Variante referenzstrukturspezifische Signaturdaten enthalten, die sich auf die spezielle Referenzstruktur beziehen. Beispielsweise können diese in einer Messung mit einem Testfahrzeug oder mehreren Testfahrzeugen oder, wie noch dargelegt werden soll, allgemein anderen Kraftfahrzeugen, ermittelt werden. Möglich ist es aber auch, die Referenzstrukturen nach verschiedenen Klassen zu unterteilen, was insbesondere dann zweckmäßig ist, wenn gleiche oder vergleichbare Referenzstrukturen an unterschiedlichen Referenzpositionen eingesetzt werden, seien es nicht erfindungsgemäß speziell erzeugte, natürlich vorhandene Strukturen oder erfindungsgemäß zu verwendende, speziell erzeugte Referenzstrukturen. So ist davon auszugehen, dass ein Übergang von einem bestimmten Bodenbelag auf einen anderen bestimmten Bodenbelag grundsätzlich vergleichbare Eigenschaften aufweist, mithin eine vergleichbare Datensignatur, die durch die Signaturdaten beschrieben wird. Ähnliches gilt für andere möglicherweise ohnehin in Verkehrsnetzen vorkommende Bodenstrukturen, die als Referenzstrukturen eingesetzt werden können, beispielsweise Straßenbahngleise und dergleichen. Ist mithin eine Referenzstruktur einer bestimmten Klasse von Referenzstrukturen zugeordnet, können die klassenspezifischen Signaturdaten ermittelt werden. Unabhängig davon, ob die Signaturdaten einer Klasse von Referenzstrukturen oder für eine bestimmte Referenzstruktur individuelle Signaturdaten verwendet werden, erfolgt zur Detektion der Referenzstruktur ein Vergleich der Signaturdaten mit den Messdaten. Wird eine Übereinstimmung innerhalb zulässiger Abweichungen festgestellt, ist die Referenzstruktur detektiert.

Die erwähnte Datensignatur, die beim Überfahren einer Bodenstruktur in den Messdaten auftritt, kann geschwindigkeitsabhängig variieren. Daher sieht eine zweckmäßige Ausgestaltung der vorliegenden Erfindung vor, dass Strukturdaten für mehrere Geschwindigkeiten verwendet werden, wobei bei der Detektion die auf die Geschwindigkeit des Kraftfahrzeugs beim Überfahren der zu prüfenden Bodenstrukturen bezogenen Strukturdaten berücksichtigt werden. Denkbar ist es im Übrigen auch, die Strukturdaten, insbesondere Signaturdaten, aus Kennlinien oder Kennfeldern abzuleiten, die wenigstens die aktuelle Geschwindigkeit des Kraftfahrzeugs auswerten. Auch funktionale Zusammenhänge der Signaturdaten oder allgemein Strukturdaten mit der aktuellen Geschwindigkeit des Kraftfahrzeugs können hergeleitet und entsprechend verwendet werden.

Alternativ ist es selbstverständlich auch denkbar, aus den Strukturdaten und den Messdaten geschwindigkeitsunabhängige Datensignaturen abzuleiten und diese zu vergleichen. Mit anderen Worten kann die Geschwindigkeit auch bei der Auswertung der Messdaten derart berücksichtigt werden, dass beispielsweise auf eine bestimmte Geschwindigkeit normierte Datensignaturen erhalten werden, die mit entsprechenden, nur für diese normierte Geschwindigkeit vorgesehenen Datensignaturen der Strukturdaten verglichen werden. Eine derartige Auswertung bietet sich insbesondere dann an, wenn die Datensignatur eine Grundform aufweist, die unabhängig von den Geschwindigkeiten gleich ist und beispielsweise lediglich skaliert und/oder verzerrt und/oder dergleichen wird. Dann kann eine Normierung auf eine bestimmte Geschwindigkeit angesetzt werden.

Es sei an dieser Stelle angemerkt, dass es grundsätzlich auch denkbar ist, bei der Auswertung der Messdaten, insbesondere bei der Detektion der Referenzstruktur, weitere veränderliche Umgebungsbedingungen des Kraftfahrzeugs zu berücksichtigen. So können sich beispielsweise Datensignaturen bei nasser und trockener Fahrbahn zumindest teilweise unterscheiden, so dass auch bezüglich der Wetterbedingungen entweder bereits in den Strukturdaten eine Unterscheidung getroffen wird, oder in der Auswertung auf bestimmte Wetterbedingungen hin sozusagen normiert wird.

Eine besonders vorteilhafte Ausgestaltung der vorliegenden Erfindung sieht vor, dass die Strukturdaten aus die Referenzstruktur betreffenden Messdaten mehrerer Kraftfahrzeuge ermittelt werden, insbesondere durch eine statistische Mittelung. Mithin werden durch mehrere Kraftfahrzeuge Messungen vorgenommen, in denen durch statistische Betrachtung Messfehler zumindest reduziert werden, so dass sich eine möglichst genaue Beschreibung der Referenzstruktur in den Strukturdaten ergibt, welche insbesondere eine Datensignatur der Referenzstruktur beschreibende Signaturdaten oder auf solche hinweisende Klassen sein können. Selbstverständlich kann auch bereits in einem solchen Vorauswertungsschritt zur Ermittlung von Strukturdaten eine Berücksichtigung der Geschwindigkeit des jeweiligen aufnehmenden Kraftfahrzeugs und/oder der Umgebungsbedingungen bei Aufnahme der einzelnen zu analysierenden Messdaten erfolgen. Besonders zweckmäßig ist es, wenn die Messdaten alle mit demselben wenigstens einen Struktursensor aufgenommen werden, insbesondere die exakt gleiche Konfiguration der Kraftfahrzeuge zur Messdatenaufnahme vorliegt.

Analog wird vorzugsweise die Referenzposition durch Mittelung von unkorrigierten Positionsdaten mehrerer Kraftfahrzeuge bei Überfahren der Referenzstruktur ermittelt. Wird eine hinreichend große Anzahl von Kraftfahrzeugen betrachtet, die Positionsdaten unter Nutzung des dem globalen Navigationssatellitensystem zugeordneten Positionssensors aufgenommen, ist damit zu rechnen, dass sich im Mittel mit größer werdender Anzahl der Stichproben die korrekte, exakte Position der Referenzstruktur ergibt, mithin die Referenzposition. Dabei wird darauf hingewiesen, dass selbstverständlich Verfahren zur Ermittlung und Entfernung von "Ausreißern", also stark abweichenden Messwerten, bei der statistischen Mittelung der unkorrigierten Positionsdaten eingesetzt werden können, beispielsweise unter Nutzung eines RANSAC-Algorithmus. Selbstverständlich sind jedoch auch andere Möglichkeiten zur Vermessung der Referenzposition grundsätzlich denkbar.

Mit besonderem Vorteil kann im Zusammenhang der Ermittlung der Strukturdaten und/oder der Referenzposition aus Daten mehrerer Kraftfahrzeuge vorgesehen sein, dass beim Überfahren einer Referenzstruktur gemessene Messdaten und/oder Positionsdaten und/oder daraus abgeleitete Daten mehrerer Kraftfahrzeuge über Kraftfahrzeug-zu-X-Kommunikation zur Auswertung, insbesondere zur Modifikation von Strukturdaten und/oder der Referenzposition, an eine Infrastruktureinrichtung übertragen werden. Eine derartige Infrastruktureinrichtung kann beispielsweise ein Server bzw. Backend-Rechner sein, der ständig Daten von mit einem Struktursensor ausgerüsteten Kraftfahrzeugen empfängt und diese auswertet, beispielsweise zur Aktualisierung und/oder Korrektur von Strukturdaten und/oder der Referenzposition einer bereits als Referenzstruktur genutzten Bodenstruktur und/oder zur Auswahl neuer Referenzstrukturen, deren Strukturdaten und/oder Referenzpositionen dann aus den Daten der mehreren Kraftfahrzeuge, wie eben beschrieben, abgeleitet und der neu ausgewählten Referenzstruktur zugeordnet werden können. An dieser Stelle ist insbesondere anzumerken, dass in einer Ausgestaltung, in der eine Detektion von Referenzstrukturen nur im Nahbereich um eine Referenzstruktur erfolgt, dennoch der Struktursensor ständig mit Positionsdaten assoziierte Messdaten aufnimmt, welche zur Auswertung an die Infrastruktureinrichtung übertragen werden. Fällt, allgemein gesagt, in von den mehreren Kraftfahrzeugen übertragenen Daten wiederholt eine besonders signifikante Datensignatur einer Bodenstruktur auf, kann diese als eine neue Referenzstruktur ausgewählt werden. Insbesondere dann, wenn alle zur erfindungsgemäßen Positionskorrektur ausgerüsteten Kraftfahrzeuge auf diese Weise ständig Daten an die Infrastruktureinrichtung liefern, ergibt sich eine hervorragende Datenbasis, aus der äußerst exakte Strukturdaten und/oder Referenzpositionen abgeleitet werden können.

Zur Bestimmung von Referenzstrukturen, insbesondere auf Grundlage der soeben genannten Datenbasis, können auf eine wenigstens ein Auswahlkriterium erfüllende Bodenstruktur bezogene Messdaten und Positionsdaten mehrerer Kraftfahrzeuge an eine oder die Infrastruktureinrichtung übertragen werden, wo sie nach einer Bewertung bezüglich wenigstens eines Eignungskriteriums für jede Bodenstruktur zur Ermittlung von Strukturdaten und einer Referenzposition ausgewertet werden, wie bezüglich der Kraftfahrzeug-zu-X-Kommunikation, welche zur Infrastruktureinrichtung selbstverständlich auch Kommunikationswege wie das Internet oder dergleichen einsetzen kann, beschrieben wurde. Bei ständigem Betrieb des Struktursensors, mithin ständiger Aufnahme von Messdaten, können den Messdaten jederzeit Positionsdaten des Positionssensors zugeordnet werden, wobei die Messdaten gegen Auswahlkriterien geprüft werden, um bestimmte Kandidaten für Referenzstrukturen aus den so vermessenen Bodenstrukturen auszuwählen. Beispielsweise können sich die Auswahlkriterien auf bestimmte Datensignaturen beziehen. Das Auswahlkriterium erfüllende Messdaten und Positionsdaten mehrerer Kraftfahrzeuge werden dann von einer oder der auch Daten zu bereits bekannten Referenzstrukturen empfangenden Infrastruktureinrichtung erhalten, wo sie Bodenstruktur für Bodenstruktur durch Eignungskriterium überprüft werden. Die Eignungskriterien können sich dabei ebenso zweckmäßig auf die Datensignatur und deren Individualität, insbesondere bezogen auf den Nahbereich, beziehen; erfüllt eine Bodenstruktur die Eignungskriterien, werden Strukturdaten und die Referenzposition ermittelt, der so neu ausgewählten Referenzstruktur zugeordnet und den einzelnen das Verfahren nutzenden Kraftfahrzeugen zugänglich gemacht, insbesondere auf die beschriebenen Arten.

Wie bereits erwähnt wurde, ist es zusätzlich zu erfindungsgemäß speziell erzeugten Referenzstrukturen denkbar, dass bereits vorhandene Bodenstrukturen als Referenzstrukturen eingesetzt werden können, beispielsweise Übergänge unterschiedlicher Bodenbeläge oder dergleichen. Erfindungsgemäß ist in jedem Fall vorgesehen, wenigstens eine speziell als Referenzstruktur erzeugte Bodenstruktur zu verwenden. Wie bereits angesprochen wurde, sind bereits Wege bekannt, Bodenstrukturen so zu schaffen, dass sie eine bestimmte Datensignatur erzeugen, beispielsweise durch wechselnde Abstände zwischen Querrillen einer Bodenstruktur. Insbesondere wurde auch bereits die Erzeugung bestimmter Schallsignale durch Bodenstrukturen vorgeschlagen und realisiert, beispielsweise in Japan auf sogenannten Melodiestraßen, die beispielsweise ein Kinderlied bei Einhalten einer bestimmten Geschwindigkeit, dort 50 km/h, erzeugen. Im Stand der Technik wurde allerdings bislang nur der Nutzen als Touristenattraktion und/oder Werbemelodie in Betracht gezogen. Im Rahmen der vorliegenden Erfindung sollen solche Techniken genutzt werden, um klar erkenntliche Datensignaturen zur Detektion von Referenzstrukturen zu erzeugen.

Die Erfindung sieht ferner vor, dass die speziell als Referenzstruktur erzeugte Bodenstruktur eine Datensignatur in den Messdaten erzeugt, in die wenigstens eine Information über die Referenzstruktur einkodiert ist. Beispielsweise kann die Referenzposition in die Datensignatur einkodiert werden. Möglich ist es also beispielsweise, durch eine bestimmte Anordnung von Querrillen oder sonstigen Struktureigenschaften der Bodenstruktur eine Datensignatur zu erzeugen, die anzeigt, dass eine Referenzstruktur folgt, wobei folgende Struktureigenschaften der Bodenstruktur Informationen, insbesondere die Referenzposition, enthalten, so dass das Kraftfahrzeug bei Erkennen einer Referenzstruktur aus der Datensignatur selbst lediglich noch die weitere Datensignatur auswerten muss, um die Referenzposition zu erhalten und unmittelbar den Vergleich mit den Positionsdaten vornehmen zu können, um die Korrekturdaten zu ermitteln. In diesem Fall sind von extern oder innerhalb des Kraftfahrzeugs zur Verfügung zu stellende Referenzpositionen und gegebenenfalls Strukturdaten nicht mehr notwendig, da lediglich noch die speziell erzeugten, gezielt detektierbaren und in ihren Datensignaturen weitere Informationen enthaltenden Referenzstrukturen verwendet werden müssen.

In weiterer Ausgestaltung der Erfindung kann vorgesehen sein, dass die Korrekturdaten über eine Kraftfahrzeug-zu-Kraftfahrzeug-Kommunikation an andere Kraftfahrzeuge im Umfeld des Kraftfahrzeugs übertragen und dort zur Korrektur von Positionsdaten eines dortigen Positionssensors verwendet werden. Es ist mithin denkbar, eine Kraftfahrzeug-zu-Kraftfahrzeug-Kommunikation auszunutzen, um anderen Kraftfahrzeugen den aktuellen Stand der Korrekturdaten, insbesondere nach Überfahren einer Referenzstruktur, mitzuteilen, so dass zum einen auch Kraftfahrzeuge, die nicht zur Durchführung des erfindungsgemäßen Verfahrens ausgerüstet sind, Positionsdaten im Hinblick auf Common-Mode-Effekte korrigieren können, zum anderen es aber auch denkbar ist, die Korrekturdaten verschiedener Kraftfahrzeuge zusammenzuführen, um die Korrektur insgesamt zu verbessern. Insbesondere können Korrekturdaten bezüglich einzelner Referenzstrukturen zusammengeführt werden und statistisch betrachtet werden, um so verbesserte, insbesondere gemittelte Korrekturdaten zu erhalten; ferner ist es aber auch denkbar, die Korrekturdaten verschiedener überfahrener Referenzstrukturen zusammenzuführen. Hat beispielsweise ein Kraftfahrzeug eine in Nord-Süd-Richtung verlaufende Referenzstruktur überfahren, sind seine Korrekturdaten bezüglich der Ost-West-Richtung äußerst genau, aber in Nord-Süd-Richtung weniger genau, falls nicht auch hier eine Art der Ortsbestimmung entlang der Verlaufsrichtung der Referenzstruktur stattfindet, worauf im Folgenden noch näher eingegangen werden wird. Ist ein anderes Kraftfahrzeug über eine in Ost-West-Richtung verlaufende Referenzstruktur gefahren, die sich in der Nähe der anderen Referenzstruktur befindet, liegen dort Korrekturdaten vor, die in Nord-Süd-Richtung sehr genau sind. Durch Austausch der entsprechenden Korrekturdaten über eine Kraftfahrzeug-zu-Kraftfahrzeug-Kommunikation können die Korrekturdaten in beiden Kraftfahrzeugen kombiniert werden, so dass eine genaue Korrektur in beiden zueinander senkrechten Richtungen erhalten wird. So führt der Austausch zu einer weiteren Verbesserung der Korrektur der Positionsdaten.

Dabei sei an dieser Stelle allgemein angemerkt, dass die durch das erfindungsgemäße Verfahren hauptsächlich zu korrigierenden Common-Mode-Fehler sich selbstverständlich mit der tatsächlichen Position des Kraftfahrzeugs verändern, mithin auf eine bestimmte Referenzstruktur bezogene Korrekturdaten nur in einem bestimmten Bereich um die Referenzstruktur sinnvoll angewendet werden können. Daher kann vorgesehen sein, dass auf eine bestimmte Referenzstruktur bezogene Korrekturdaten nur in einem vordefinierten Bereich um die Referenzstruktur verwendet werden, beispielsweise einem 8 bis 12 km durchmessenden Bereich. Auf diese Weise wird sichergestellt, dass die Korrekturdaten auch tatsächlich eine Korrektur der gemessenen Positionsdaten erlauben.

Zweckmäßigerweise können die Korrekturdaten satellitenspezifisch ermittelt werden. Dann ist es möglich, Korrekturdaten weiter zu verwenden, auch wenn ein spezieller Satellit gegebenenfalls nicht mehr empfangen wird. Dem liegt der Gedanke zugrunde, dass für jeden Satelliten die Common-Mode-Fehlerquellen unterschiedlich sind, beispielsweise unterschiedliche Luftschichten und dergleichen durch die Signale durchlaufen werden.

Eine bevorzugte Weiterbildung des erfindungsgemäßen Verfahrens sieht vor, dass die Messdaten vor einem Detektionsvorgang gefiltert werden, insbesondere zur Schärfung einer von einer Referenzstruktur erzeugten Datensignatur. Mit besonderem Vorteil kann also eine Vorverarbeitung der Messdaten vorgenommen werden, die die Eigenschaften der Messdaten, die zur Detektion verwendet werden, besonders hervorhebt, insbesondere eine von einer Referenzstruktur erwartete Datensignatur. Sind Strukturdaten, insbesondere Signaturdaten, gegeben, die zur Detektion der Referenzstruktur verwendet werden, können diese eine bestimmte Datensignatur beschreiben, welche durch eine geeignete Filterung besser hervorgehoben werden kann. Auf diese Weise ist dann auch eine leichtere Detektion möglich. Bei einem Übergang von einer Teerstraße auf ein Kopfsteinpflaster treten beispielsweise Änderungen im Frequenzband und Änderungen in den Amplituden, die gemessen werden, auf. Zur besseren Sichtbarmachung der so vermessenen, durch die mechanische Wechselwirkung erzeugten Signale kann in diesem Fall ein Butterworth-Filter, insbesondere ein Butterworth-Filter erster Ordnung, mit einer geeigneten Grenzfrequenz auf die Zeitsignale angewendet werden. Versuche haben gezeigt, dass so ein der Übergang der Bodenbeläge besser erkennbar wird. Entsprechend lassen sich auch für andere erwartete Referenzstrukturen, beispielsweise Schienen und dergleichen, Filter auffinden, die die Datensignaturen hervorheben.

Wie bereits dargelegt wurde, sind verschiedene Ansätze denkbar, um Korrekturdaten für verschiedene Richtungen zu bestimmen, insbesondere, wenn durch eine bestimmte, in einer Verlaufsrichtung verlaufende Referenzstruktur eine exakte Positionskalibrierung bzw. -synchronisierung nur senkrecht zur Verlaufsrichtung möglich ist. In einer ersten Ausgestaltung kann dann vorgesehen sein, dass innerhalb vordefinierter Nachbarschaftsbereiche in unterschiedlichen Richtungen, insbesondere zueinander senkrechten Richtungen, verlaufende Referenzstrukturen verwendet werden. Insbesondere bieten sich Kurvenbereiche oder Kreuzungsbereiche als Nachbarschaftsbereiche an. Dann kann ein Kraftfahrzeug nacheinander zwei in nicht parallelen Richtungen verlaufende Referenzstrukturen überfahren und somit insbesondere vollständige Korrekturdaten für alle Richtungen erzielen. Die wenigstens zwei Referenzstrukturen können dabei einander zugeordnet sein, beispielsweise gleicher Art sein. Dabei wird darauf hingewiesen, dass in einer Ausgestaltung, in der Korrekturdaten zwischen Kraftfahrzeugen über Kraftfahrzeug-zu-Kraftfahrzeug-Kommunikation ausgetauscht werden, es nicht einmal notwendig ist, dass ein Kraftfahrzeug zwei in unterschiedlichen Richtungen verlaufende Referenzstrukturen überfährt, sondern dass dies zwei unterschiedliche Kraftfahrzeuge tun, die sich aber ihre Korrekturdaten zur Verfügung stellen. Insbesondere bei Kreuzungen kann es sich damit um eine zweckmäßige Ausgestaltung handeln.

Eine zweite konkrete Ausführungsform der Erfindung sieht vor, dass zur Bestimmung einer Position des Kraftfahrzeugs in Verlaufsrichtung einer Struktur, also insbesondere im Wesentlichen senkrecht zur Fahrtrichtung, durch wenigstens einen optischen Sensor aufgenommene Optikdaten eines in einer bekannten Positionsbeziehung zu der Referenzstruktur, insbesondere eines Ortes auf der Referenzstruktur in der Verlaufsrichtung, stehenden optisch detektierbaren Objekts zum Zeitpunkt des Überfahrens der Referenzstruktur berücksichtigt wird. Möglich ist es also, den mechanische Wegmarken bildenden Referenzstrukturen auch optische Wegmarken, also optisch detektierbare Objekte, zuzuordnen. Moderne Kraftfahrzeuge weisen meist eine Umfeldsensorik auf, die es ermöglicht, die Position von Objekten relativ zum Kraftfahrzeug zu ermitteln, so dass beispielsweise eine bestimmte Position eines optisch detektierbaren Objekts zum Zeitpunkt des Überfahrens der Referenzstruktur einen Hinweis auf die Position des Kraftfahrzeugs entlang der Verlaufsrichtung der Referenzstruktur geben kann, wenn die Ortsbeziehung zwischen der Referenzstruktur und dem optisch detektierbaren Objekt bekannt ist. Bei derartig optisch detektierbaren Objekten kann es sich um Spurmarkierungen, beispielsweise eine Mittellinie oder eine Fahrbahnbegrenzung, handeln, denkbar ist jedoch auch die optische Detektion von Schildern oder sonstigen optischen Wegmarken, die in einer klaren räumlichen Beziehung zu der Referenzstruktur stehen, so dass die Position des Kraftfahrzeugs entlang der Verlaufsrichtung auf der Referenzstruktur ebenso festgestellt werden kann. So ist durch eine Kombination der Erfassung von mechanischen Wegmarken und optischen Wegmarken eine genaue Korrektur von Positionsdaten auch bei Überfahren einer einzigen, eine im Wesentlichen zur Fahrtrichtung senkrechte Verlaufsrichtung aufweisenden Referenzstruktur möglich.

Neben dem Verfahren betrifft die vorliegende Erfindung auch ein Kraftfahrzeug, umfassend einen Positionssensor, einen Struktursensor und ein zur Durchführung des erfindungsgemäßen Verfahrens ausgebildetes Steuergerät. Sämtliche Ausführungen bezüglich des erfindungsgemäßen Verfahrens lassen sich analog auf das erfindungsgemäße Kraftfahrzeug übertragen, so dass auch mit diesem die genannten Vorteile erhalten werden können. Insbesondere empfängt eine Auswerteeinheit des Steuergeräts die Messdaten des Struktursensors und wertet diese aus, um eine Referenzstruktur darin zu detektieren. Eine Korrektureinheit kann durch Vergleich der Referenzposition und der Positionsdaten die Korrekturdaten bestimmen, welche dann entsprechend angewendet werden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine erste Skizze zur Anordnung von Referenzstrukturen,
- Fig. 2: die Anordnung von Referenzstrukturen in einem Kreisverkehr,
- Fig. 3: weitere Beispiele für Referenzstrukturen,
- Fig. 4A - 4E: Zeichnungen zur Erläuterung des erfindungsgemäßen Verfahrens,
- Fig. 5: Messergebnisse beim Übergang von Kopfsteinpflaster auf Teerstraße,
- Fig. 6: gefilterte Messergebnisse beim Übergang von Kopfsteinpflaster auf Teerstraße, und
- Fig. 7: eine Prinzipskizze eines erfindungsgemäßen Kraftfahrzeugs.

Die Grundidee der vorliegenden Erfindung ist es, Bodenstrukturen, deren Position im geodätischen Koordinatensystem möglichst exakt bekannt ist, als Referenzstrukturen zur Ermittlung von Korrekturdaten für Positionsdaten eines einem globalen Navigationssatellitensystem zugeordneten Positionssensors zu verwenden. Dabei werden Struktursensoren, bevorzugt als Körperschallsensoren ausgebildete Beschleunigungssensoren, verwendet, um die mechanische Wechselwirkung des Kraftfahrzeugs, konkret der Reifen, mit der Referenzstruktur zu erfassen und die Referenzstruktur hierdurch zu detektieren. Ist erst der Zeitpunkt bekannt, zu dem eine Referenzstruktur überfahren wurde, können die zu diesem Zeitpunkt aufgenommenen Positionsdaten mit der Referenzposition der Referenzstruktur verglichen werden, um so Korrekturdaten zu ermitteln. Als Referenzstrukturen geeignete Bodenstrukturen zeichnen sich dadurch aus, dass sie in den Messdaten eine bestimmte, erkennbare Datensignatur erzeugen. Hierfür eignen sich zum einen spezielle für das erfindungsgemäße Verfahren auf die Fahrbahn aufgebrachte Referenzstrukturen, beispielsweise bestimmte Querrillenanordnungen, zum anderen aber auch nicht erfindungsgemäß speziell erzeugte, ohnehin vorkommende Bodenstrukturen.

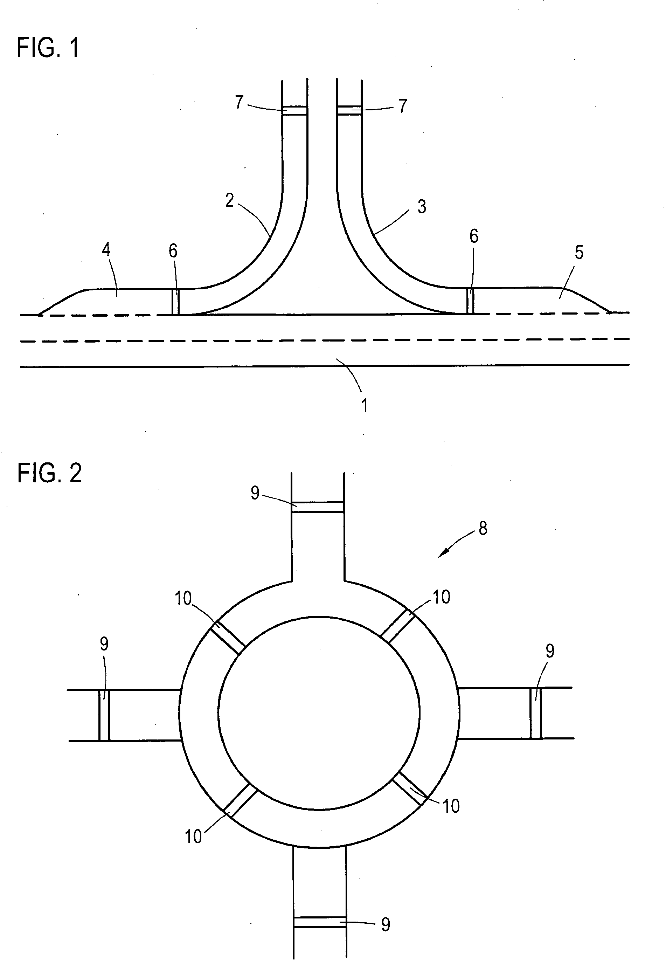

Beispiele für Referenzstrukturen und deren Anordnung werden durch die Fig. 1 - 3 näher dargelegt. Fig. 1 zeigt einen Teil einer Autobahn 1 mit einer Abfahrt 2 und einer Auffahrt 3. In einer Verlaufsrichtung, die senkrecht zur Fahrtrichtung ist, erstrecken sich zunächst auf dem Bremsstreifen 4 und dem Beschleunigungsstreifen 5 Referenzstrukturen 6, die vorliegend aus einer bestimmten Abfolge unterschiedlicher Querrillen bestehen, die das Kraftfahrzeug beim Auffahren bzw. Abfahren überfährt. Die Querrillen sind in ihrem Ausmaß und ihrem Abstand so gewählt, dass sich eine bestimmte Datensignatur ergibt, welche auch Informationen über die Referenzstruktur 6 enthalten kann, jedoch nicht zwangsläufig muss. Überfährt ein Kraftfahrzeug die Referenzstrukturen 6, wird die Wechselwirkung mit der Referenzstruktur durch den wenigstens einen Struktursensor, insbesondere einen Körperschallsensor, vermessen und mit der bekannten Referenzposition kann die Genauigkeit des Positionssensors und eine Korrektur bestimmt werden. Dies gilt allerdings ersichtlich zunächst nur in Fahrtrichtung, also senkrecht zur Verlaufsrichtung, da die laterale Position des Kraftfahrzeugs auf dem Beschleunigungsstreifen 5 bzw. Bremsstreifen 4 variieren kann und daher zunächst nicht klar ist, wo in der Verlaufsrichtung das Kraftfahrzeug die Referenzstruktur 6 überfahren hat. Im in Fig. 1 dargestellten Fall wird dieses Problem durch zweite Referenzstrukturen 7 gelöst, die sich in einem Nachbarschaftsbereich zu den Referenzstrukturen 6 befinden und deren Verlaufsrichtung unter Ausnutzung des kurvigen Verlaufs der Abfahrt 2 und der Auffahrt 2 senkrecht zur Verlaufsrichtung der Referenzstruktur 6 gewählt ist. Mit anderen Worten erlauben die Referenzstrukturen 7 die genaue Positionsbestimmung des Kraftfahrzeugs in der Verlaufsrichtung der Referenzstrukturen 6.

Fährt ein Kraftfahrzeug von der Autobahn 1 ab oder auf diese auf, wird es zwangsläufig die entsprechenden Referenzstrukturen 6 und 7 überfahren, so dass eine Kalibrierung und Ermittlung von Korrekturdaten in beiden zueinander senkrechten Fahrtrichtungen und somit allgemein für das geodätische Koordinatensystem bestimmt werden kann.

Fig. 2 zeigt in einem ähnlichen Fall einen Kreisverkehr 8, in dem in jeder Zufahrt Referenzstrukturen 9 vorgesehen sind. Nachdem es allerdings denkbar ist, dass ein Kraftfahrzeug den Kreisverkehr 8 geradeaus durchfährt, mithin lediglich eine gleiche Verlaufsrichtung aufweisende Referenzstrukturen 9 überfährt, wurden vorliegend weitere Referenzstrukturen 10 in um 45° gegenüber den Verlaufsrichtungen der Referenzstrukturen 9 verkippten Verlaufsrichtungen vorgesehen, so dass in jedem Fall Referenzstrukturen 9, 10 unterschiedlicher Verlaufsrichtungen, die nicht parallel sind, überfahren werden, so dass eine Positionskorrektur für alle Richtungen, mithin die Korrekturdaten, errechnet werden können.

Es wird darauf hingewiesen, dass in den dargestellten Ausführungsbeispielen auch ein Austausch von Korrekturdaten zwischen Kraftfahrzeugen durch Kraftfahrzeug-zu-Kraftfahrzeug-Kommunikation vorgesehen ist, so dass die Informationen von Kraftfahrzeugen, die in unterschiedlichen Verlaufsrichtungen verlaufende Referenzstrukturen 6, 7, 9, 10 überfahren haben, kombiniert werden können. Zudem ist auch eine Verbesserung der Korrekturdaten durch statische Betrachtung von Korrekturdaten unterschiedlicher Kraftfahrzeuge möglich.

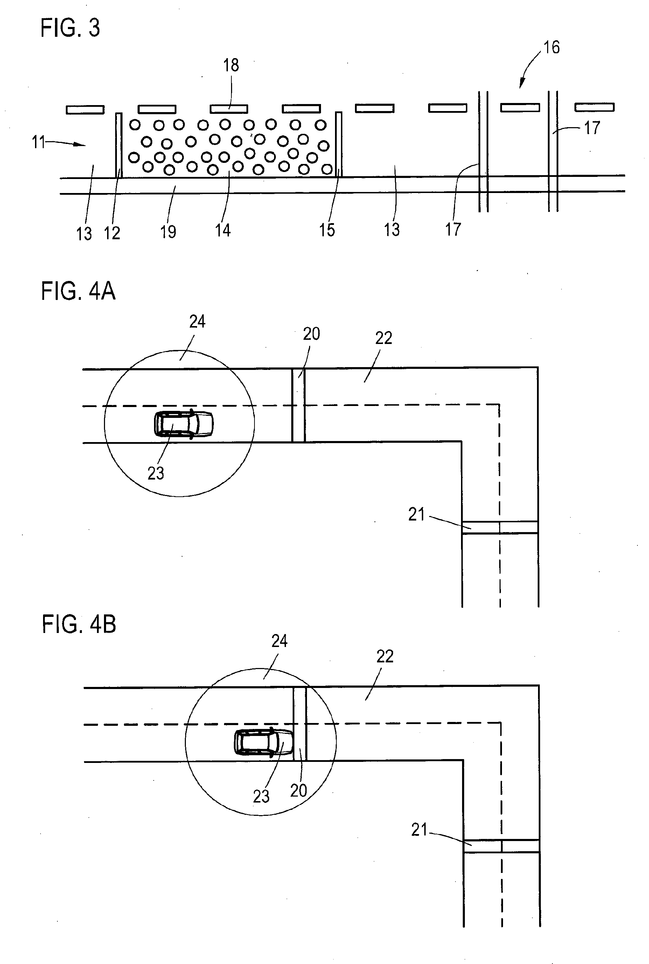

Erfindungsgemäß handelt es sich bei den Referenzstrukturen, wie im Falle der Referenzstrukturen 6, 7, 9, 10 dargelegt, um speziell für das erfindungsgemäße Verfahren auf die Fahrbahn aufgebrachte Referenzstrukturen. Grundsätzlich sind zusätzlich auch ohnehin vorkommende Bodenstrukturen als Referenzstrukturen denkbar, wie dies beispielhaft in Fig. 3 gezeigt ist. Dort ist zunächst für eine Fahrbahn 11 als Referenzstruktur 12 ein Übergang von einem Teerbelag 13 auf ein Kopfsteinpflaster 14 gezeigt. Selbstverständlich kann auch der Übergang von dem Kopfsteinpflaster zurück auf den Teerbelag als eine Referenzstruktur 15 betrachtet werden. Ferner zeigt Fig. 3 ein die Fahrbahn kreuzendes Gleis 16, beispielsweise ein Straßenbahngleis. Dessen Schienen können dort, wo sie die Fahrbahn 11 senkrecht zur Fahrtrichtung durchqueren, ebenso als Referenzstrukturen 17 (oder als eine gemeinsame Referenzstruktur 17) betrachtet werden.

Neben den hier gezeigten Beispielen für Referenzstrukturen 12, 15, 17 können als ohnehin im Straßennetz vorkommende Bodenstrukturen auch Fahrbahnschwellen, Brückenfugen oder Absenkungen der Fahrbahnoberfläche als Referenzstrukturen verwendet werden. Ein spezielles Beispiel ist auch ein Bordstein, der von einem Kraftfahrzeug überfahren wird, da hier ein charakteristisches Absenken des Kraftfahrzeugs stattfindet, welches ebenso durch den Struktursensor, insbesondere einen Beschleunigungssensor, vermessen werden kann. Dann kann auch von einer Auswertung der Fahrdynamik, die durch Wechselwirkung mit der Bodenstruktur entsteht, gesprochen werden.

Bei den Referenzstrukturen 12, 15 und 17, die in Fig. 3 dargestellt sind, oder anderen ohnehin im Straßennetz vorkommenden Referenzstrukturen ist es im Übrigen auch möglich, eine genaue Positionsbestimmung nicht nur senkrecht zur Verlaufsrichtung der Referenzstrukturen 12, 15, 17 vorzunehmen, wenn zusätzlich ein optisch detektierbares Objekt, dessen räumliche Anordnung zu der Referenzstruktur bekannt ist, erfasst werden kann. Im Beispiel der Fig. 3 bieten sich als optisch detektierbare Objekte die Mittellinie 18 und die Fahrbahnbegrenzung 19 an. Die Auswertung der Daten geeigneter optischer Sensoren erlaubt es, die Position des Kraftfahrzeugs auf der Fahrbahn 11, mithin in Verlaufsrichtung der Referenzstrukturen 12, 15, 17, festzustellen, um auch in dieser Richtung eine verlässliche Positionsbestimmung zu erlauben. Selbstverständlich lässt sich dieser Gedanke auch auf die erfindungsgemäß zusätzlich aufgebrachten Referenzstrukturen 6, 7, 9, 10 übertragen.

Im hier dargestellten Ausführungsbeispiel sind die Struktursensoren der zur Durchführung des Verfahrens ausgebildeten Kraftfahrzeuge grundsätzlich aktiv. Bodenstrukturen werden überfahren und es werden Messdaten aufgenommen, aus denen insbesondere eine Datensignatur der überfahrenen Bodenstrukturen abgeleitet werden kann. Wird festgestellt, dass eine Bodenstruktur, beschrieben durch die Datensignatur, wenigstens ein Auswahlkriterium erfüllt, die sie als Kandidat für eine Referenzstruktur qualifiziert, werden die aufgenommenen Messdaten, beispielsweis ein Form der daraus abgeleiteten Datensignatur, gemeinsam mit den (gegebenenfalls unkorrigierten) Positionsdaten des Positionssensor beim Überfahren der Bodenstruktur an eine zentrale Infrastruktureinrichtung, konkret einen Server oder eine Backend-Einrichtung, übertragen. Dort laufen mithin die Daten verschiedenster Kraftfahrzeuge zusammen. Diese Daten werden dort zur Bestimmung neuer Referenzstrukturen ausgewertet, indem zu jeder Bodenstruktur, zu der Daten vorliegen, Eignungskriterien überprüft werden. Sind die Eignungskriterien erfüllt, werden aus den auf die Bodenstruktur bezogenen Daten Strukturdaten und die Referenzposition, insbesondere durch statistische Betrachtung der empfangenen Daten, bestimmt und die Bodenstruktur wird als neue Referenzstruktur akzeptiert sowie der Liste von Referenzstrukturen hinzugefügt.

Zu jeder Referenzstruktur liegen also die Referenzposition und Strukturdaten vor, welche vorliegend Signaturdaten sind, die mit den Messdaten verglichen werden können, um die Referenzstruktur dann zu detektieren. Die Strukturdaten können auch eine Klasse von Referenzstrukturen beschreiben, denen die Referenzstruktur zugehörig ist, beispielsweise "Übergänge von Teerbelag auf Kopfsteinpflaster". Diesen verschiedenen Klassen von Referenzobjekten sind wiederum die spezielle Datensignatur dieser Referenzobjekte beschreibende Signaturdaten zugeordnet, die für den Vergleich mit den Messdaten herangezogen werden können.

Um in diesem Ausführungsbeispiel überhaupt Referenzstrukturen detektieren zu können, muss das Kraftfahrzeug also die Referenzstrukturen durch ihre Strukturdaten und die zugeordnete Referenzposition kennen. Zweckmäßig übermittelt die Infrastruktureinrichtung diese Daten auf Anfrage oder regelmäßig an die zur Durchführung des Verfahrens ausgebildeten Kraftfahrzeuge. Empfängt ein Kraftfahrzeug Daten zu einer Referenzstruktur, werden diese vorliegend zur Aktualisierung von digitalem Kartenmaterial eines Navigationssystems des Kraftfahrzeugs verwendet, wobei auch andere Möglichkeiten denkbar sind, beispielsweise eine kraftfahrzeuginterne Datenbank.

Die Fig. 4A - 4E erläutern nun schrittweise das erfindungsgemäße Verfahren in einer Ausführungsform näher, in der in zueinander senkrechten Verlaufsrichtungen verlaufende Referenzstrukturen 20, 21 auf einer Straße 22 genutzt werden. Die Verlaufsrichtungen sind dabei wie in allen Beispielen senkrecht zur Fahrtrichtung auf der Fahrbahn bzw. Straße 22.

In Fig. 4A nähert sich ein zur Durchführung des erfindungsgemäßen Verfahrens ausgebildetes Kraftfahrzeug 23 der Referenzstruktur 20, wobei es zu diesem Zeitpunkt nur über unkorrigierte Positionsdaten verfügt, was durch den Unsicherheitsbereich 24 um das Kraftfahrzeug 23 beschrieben wird. Damit tritt das Kraftfahrzeug 23 in einen Nahbereich zur Referenzstruktur 20 ein, was aufgrund der zwar nur näherungsweise die tatsächliche Position beschreibenden, aber hierfür hinreichend genauen Positionsdaten und der bekannten Referenzposition der Referenzstruktur 20 leicht festgestellt werden kann. Beispielsweise kann ein Nahbereich als ein bestimmter Bereich um die Referenzposition beschrieben sein, beispielsweise einhundert Meter um die Referenzposition, um Unsicherheiten auszugleichen. Erst dann, wenn der Nahbereich einer Referenzstruktur 20, 21 befahren wird, findet tatsächlich eine Auswertung der Messdaten im Hinblick auf die entsprechende Referenzstruktur 20, 21 statt, da durch die auch wenn ungenau bekannte, aus den Positionsdaten abgeleitete Position des Kraftfahrzeugs 23 die Detektion derselben erwartet wird.

In Fig. 4B hat das Kraftfahrzeug 23 die Referenzstruktur 20 erreicht und beginnt, diese zu überfahren. Dabei werden mithin durch den Struktursensor die Messdaten aufgenommen, die die Datensignatur enthalten, die der durch die Signaturdaten der Referenzstruktur beschriebenen Datenstruktur entspricht. Entsprechend kann in der aktuellen Fahrtrichtung des Kraftfahrzeugs 23, senkrecht zur Verlaufsrichtung der Referenzstruktur 20, die genaue Position des Kraftfahrzeugs 23 festgestellt werden und es kann eine Korrektur senkrecht zur Verlaufsrichtung der Referenzstruktur 20 als Korrekturdaten ermittelt werden.

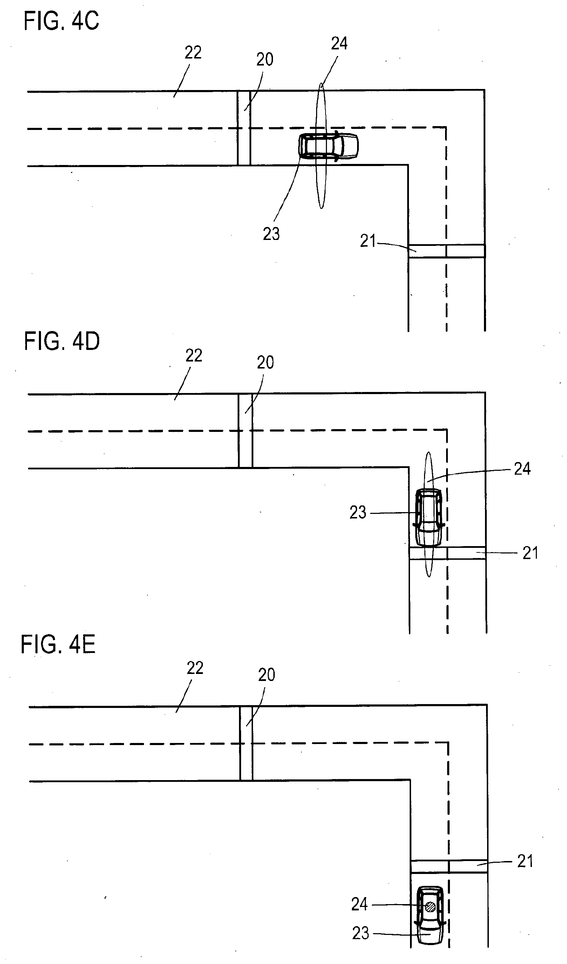

Dies ist durch den veränderten Unsicherheitsbereich 24 der Fig. 4C nach Überfahren der Referenzstruktur 20 genauer dargestellt. Es ist mithin in Verlaufsrichtung der Referenzstruktur 20 noch eine große Unsicherheit gegeben, senkrecht dazu ist jedoch die Ungenauigkeit stark reduziert.

In Fig. 4D erreicht das Kraftfahrzeug 23 die im Nachbarschaftsbereich der Referenzstruktur 20 liegende Referenzstruktur 21 und beginnt, diese zu überfahren. Erneut werden Messdaten aufgenommen, die eine der durch die Signaturdaten der Referenzstruktur 21 beschriebenen Datensignatur entsprechende Datensignatur enthalten, was durch Vergleich der Messdaten und der Signaturdaten wiederum festgestellt werden kann. Die Referenzstruktur 21 wird detektiert und mit deren Referenzposition kann wiederum eine genaue Ortsbestimmung senkrecht zu der Verlaufsrichtung der Referenzstruktur 21 erfolgen.

Dies hat zur Folge, vgl. Fig. 4E, dass die Unsicherheit, beschrieben durch den Unsicherheitsbereich 24, in allen Richtungen des geodätischen Koordinatensystems nun deutlich reduziert ist und die Korrekturdaten im Umkreis der Referenzstrukturen 20, 21 genutzt werden können, um die Positionsdaten zu korrigieren und äußerst exakt eine Position des Kraftfahrzeugs 23 im geodätischen Koordinatensystem des globalen Navigationssatellitensystems zu erhalten.

Nach Abschluss dieser Ermittlung der Korrekturdaten können diese noch über Kraftfahrzeug-zu-Kraftfahrzeug-Kommunikation an andere Kraftfahrzeuge in der Umgebung weitergegeben werden, so dass diese, so sie beispielsweise das erfindungsgemäße Verfahren nicht ausführen können, dennoch die Korrekturdaten nützen können, oder um die Korrekturdaten mit Korrekturdaten anderer Kraftfahrzeuge abgleichen und verbessern zu können.

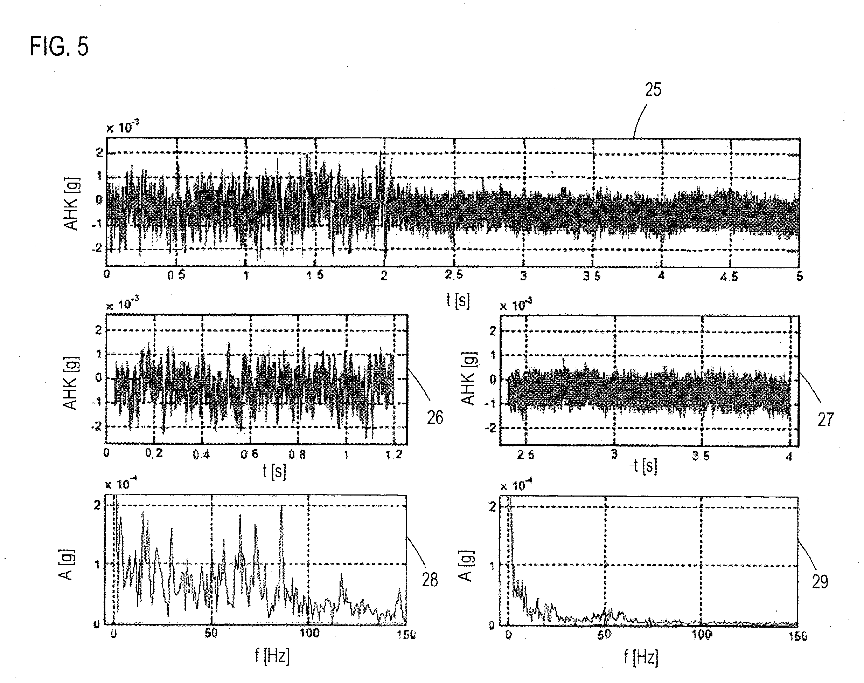

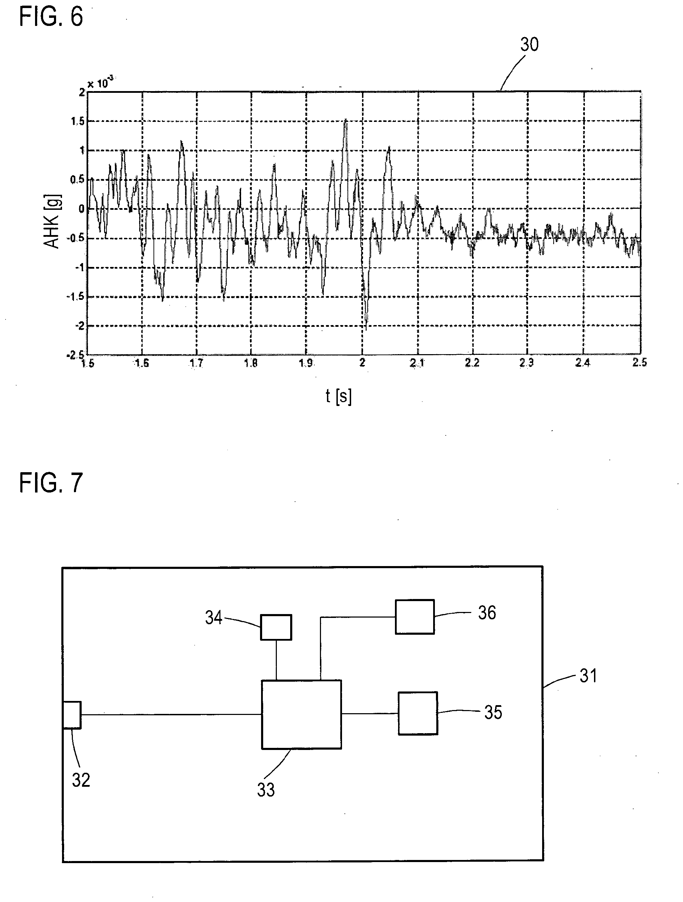

Im Hinblick auf die Fig. 5 und 6 soll die konkrete Auswertung der Messdaten für einen speziellen Fall nochmals genauer beschrieben werden. Die dort dargestellten Graphen beziehen sich auf einen Übergang von Kopfsteinpflaster auf eine Teerstraße, wie er durch einen Körperschallsensor detektiert wird. Der Körperschallsensor ist dabei am Fahrzeugrahmen des messenden Kraftfahrzeugs angebracht, wobei vorliegend der Körperschallsensor am Heck des Kraftfahrzeugs angeordnet ist. Als Körperschallsensor wurde ein 500 g-Beschleunigungssensor eingesetzt, wobei die Messungen bei einer Geschwindigkeit von 30 bis 40 km/h stattfanden.

Dabei sei an dieser Stelle noch angemerkt, dass die Geschwindigkeit des Kraftfahrzeugs auch einen Einfluss auf die konkrete Form der Datensignatur haben kann, was im Verfahren selbstverständlich geeignet berücksichtigt werden kann, insbesondere, indem Strukturdaten für verschiedene Geschwindigkeiten vorgesehen sind (als Kennfeld oder Kennlinie) oder aber die Datensignatur auf eine bestimmte Geschwindigkeit rückgerechnet wird, für die Signaturdaten in den Strukturdaten vorliegen. Auch eine Abhängigkeit von Umgebungsbedingungen beschreibenden Parametern, beispielsweise die Nässe der Fahrbahn betreffenden Parametern, ist möglich.

Zurückkehrend zum konkreten Beispiel der Fig. 5 und 6 sei zunächst dargelegt, dass im Allgemeinen am Übergang ein Wechsel von aufgenommenen Frequenzbändern stattfindet, zudem können sich Amplituden ändern. Der Graph 25 der Fig. 5 zeigt die Messdaten AHK aufgetragen gegen die Zeit t beim Überfahren des Übergangs von Kopfsteinpflaster auf Teerstraße. Durch Betrachtung der unbearbeiteten Messdaten lässt sich bereits der Unterschied zwischen beiden Straßenbelägen eindeutig erkennen und mit bloßem Auge auf weniger als 100 ms genau bestimmen. Ein Ausschnitt für das Kopfsteinpflaster ist im Graphen 26 zu sehen, ein Ausschnitt für die Teerstraße im Graphen 27. Betrachtet man die Fourier-Transformationen der Ausschnitte 26 und 27, Graphen 28 und 29, erkennt man eindeutig die Unterschiede in den auftretenden Frequenzbändern, so dass deutlich erkennbar ist, dass der Übergang von Kopfsteinpflaster auf Teerstraße auch automatisch durch eine Auswerteeinheit deutlich erkennbar ist. Um die Datensignatur besser sichtbar zu machen, werden im vorliegenden Beispiel die Messdaten mit einem Butterworth-Filter erster Ordnung mit eine Grenzfrequenz von 500 Hz vorbearbeitet. Das Ergebnis ist in Fig. 6 im Graphen 30 näher dargestellt. Ein weicher Übergang ist hierbei nicht erkennbar, da der Struktursensor hinter der Hinterachse angebracht ist. Somit sind die durch das Kopfsteinpflaster erzeugten Vibrationen unverändert erkennbar, wenn die Räder der Vorderachse sich schon auf der Teerstraße befinden. Es ergibt sich, dass ein scharfer Übergang der Bodenbeläge erkennbar ist, etwa bei 2,05 s.

Die Fig. 5 und 6 dienen nur der Verdeutlichung der zugrunde liegenden Prinzipien, wobei zur konkreten Ermittlung des Zeitpunkts des Überfahrens einer Referenzstruktur beim Übergang von Kopfsteinpflaster auf Teerstraße aus den Messdaten selbstverständlich auf bekannte Art und Weise Datensignaturen abgeleitet werden können, die mit Signaturdaten der Referenzstruktur verglichen werden können, um die Referenzstruktur, vorliegend beispielsweise die Referenzstruktur 15 der Fig. 3, zu detektieren.

Fig. 7 zeigt schließlich eine Prinzipskizze eines erfindungsgemäßen Kraftfahrzeugs 31. Diese weist einen hier im Heckbereich angeordneten Struktursensor 32 auf, wobei selbstverständlich auch weitere Struktursensoren verwendet werden können, deren Messdaten ebenso ausgewertet werden. Der Struktursensor 32 liefert seine Messdaten an ein Steuergerät 33, das zur Durchführung des erfindungsgemäßen Verfahrens ausgebildet ist und mithin auch Positionsdaten des Positionssensors 34, hier eines GPS-Sensors, empfängt. Das Steuergerät 33 ist ferner mit einem Navigationssystem 35 und einer Kommunikationseinrichtung 36 zur Kraftfahrzeug-zu-X-Kommunikation und Kraftfahrzeug-zu-Kraftfahrzeug-Kommunikation verbunden.

## Patentansprüche

1. Verfahren zur Korrektur von mit einem ein globales Navigationssatellitensystem nutzenden Positionssensor (34) eines Kraftfahrzeugs (23, 31) aufgenommenen Positionsdaten, wobei die mechanische Wechselwirkung des Kraftfahrzeugs (23, 31) mit Bodenstrukturen beim Überfahren der Bodenstrukturen mittels eines Struktursensors (32) vermessen und durch Auswerten der Messdaten des Struktursensors (32) das Überfahren wenigstens einer Referenzstruktur (6, 7, 9, 10, 12, 15, 17, 20, 21), für die die genaue Referenzposition im geodätischen Koordinatensystem des globalen Navigationssatellitensystems in wenigstens einer Richtung bekannt ist, detektiert wird, wobei aus einer Abweichung der zum Zeitpunkt des Überfahrens mit dem Positionssensor (34) gemessenen Positionsdaten von der Referenzposition für die Korrektur zu verwendende Korrekturdaten ermittelt werden,
**dadurch gekennzeichnet,**
**dass** wenigstens eine speziell als Referenzstruktur (6, 7, 9, 10, 20, 21) erzeugte Bodenstruktur verwendet wird, welche in den Messdaten eine Datensignatur erzeugt, in die wenigstens eine Information über die Referenzstruktur einkodiert ist.

2. Verfahren nach Anspruch 1,
**dadurch gekennzeichnet,**
**dass** als Struktursensor (32) ein Körperschallsensor und/oder ein Beschleunigungssensor und/oder ein Mikrophon und/oder ein Federwegsensor verwendet wird.

3. Verfahren nach Anspruch 1 oder 2,
**dadurch gekennzeichnet,**
**dass** eine Detektion einer Referenzstruktur (6, 7, 9, 10, 12, 15, 17, 20, 21) nur durchgeführt wird, wenn die Positionsdaten des Kraftfahrzeugs (23, 31) anzeigen, dass sich das Kraftfahrzeug (23, 31) in einem Nahbereich um die Referenzstruktur (6, 7, 9, 10, 12, 15, 17, 20, 21) befindet.

4. Verfahren nach einem der vorangehenden Ansprüche,
**dadurch gekennzeichnet,**
**dass** die Referenzstruktur (6, 7, 9, 10, 12, 15, 17, 20, 21) beschreibende Strukturdaten und eine der Referenzstruktur zugeordnete Referenzposition ermittelt werden, insbesondere aus einem digitalen Kartenmaterial eines Navigationssystems (35) des Kraftfahrzeugs (23, 31) und/oder aus von einer Kraftfahrzeug-zu-X-Kommunikationseinrichtung (36) empfangenen Kommunikationsdaten und/oder aus einer kraftfahrzeuginternen Datenbank.

5. Verfahren nach Anspruch 4,
**dadurch gekennzeichnet,**
**dass** die Strukturdaten bei der Detektion der Referenzstruktur (6, 7, 9, 10, 12, 15, 17, 20, 21) in den Messdaten berücksichtigt werden.

6. Verfahren nach Anspruch 5,
**dadurch gekennzeichnet,**
**dass** die Strukturdaten Signaturdaten und/oder Zuordnungsdaten zu einer Klasse von Referenzstrukturen (6, 7, 9, 10, 12, 15, 17, 20, 21) umfassen, wobei jeder Klasse klassenspezifische Signaturdaten zugeordnet sind, wobei zur Detektion der Referenzstruktur (6, 7, 9, 10, 12, 15, 17, 20, 21) die Signaturdaten mit den Messdaten verglichen werden.

7. Verfahren nach Anspruch 5 oder 6,
**dadurch gekennzeichnet,**
**dass** Strukturdaten für mehrere Geschwindigkeiten verwendet werden, wobei bei der Detektion die auf die Geschwindigkeit des Kraftfahrzeugs (23, 31) beim Überfahren der zu prüfenden Bodenstrukturen bezogene Strukturdaten berücksichtigt werden, und/oder aus den Strukturdaten und den Messdaten geschwindigkeitsunabhängige Datensignaturen abgeleitet und verglichen werden.

8. Verfahren nach einem der Ansprüche 4 bis 7,
**dadurch gekennzeichnet,**
**dass** die Strukturdaten aus die Referenzstruktur (6, 7, 9, 10, 12, 15, 17, 20, 21) betreffenden Messdaten mehrerer Kraftfahrzeuge (23, 31) ermittelt werden, insbesondere durch eine statistische Mittelung.

9. Verfahren nach einem der Ansprüche 4 bis 8,
**dadurch gekennzeichnet,**
**dass** die Referenzposition durch Mittelung von unkorrigierten Positionsdaten mehrerer Kraftfahrzeuge (23, 31) bei Überfahren der Referenzstruktur (6, 7, 9, 10, 12, 15, 17, 20, 21) ermittelt wird.

10. Verfahren nach Anspruch 8 oder 9,
**dadurch gekennzeichnet,**
**dass** beim Überfahren einer Referenzstruktur (6, 7, 9, 10, 12, 15, 17, 20, 21) gemessene Messdaten und/oder Positionsdaten und/oder daraus abgeleitete Daten mehrerer Kraftfahrzeuge (23, 31) über Kraftfahrzeug-zu-X-Kommunikation zur Auswertung, insbesondere zur Modifikation von Strukturdaten und/oder der Referenzposition, an eine Infrastruktureinrichtung übertragen werden.

11. Verfahren nach einem der Ansprüche 4 bis 10,
**dadurch gekennzeichnet,**
**dass** zur Bestimmung von Referenzstrukturen (6, 7, 9, 10, 12, 15, 17, 20, 21) auf eine wenigstens ein Auswahlkriterium erfüllende Bodenstruktur bezogene Messdaten und Positionsdaten mehrerer Kraftfahrzeuge (23, 31) an eine oder die Infrastruktureinrichtung übertragen werden, wo sie nach einer Bewertung bezüglich wenigstens eines Eignungskriteriums für jede Bodenstruktur zur Ermittlung von Strukturdaten und einer Referenzposition ausgewertet werden.

12. Verfahren nach einem der vorangehenden Ansprüche,
**dadurch gekennzeichnet,**
**dass** die Korrekturdaten über eine Kraftfahrzeug-zu-Kraftfahrzeug-Kommunikation an weitere Kraftfahrzeuge (23, 31) im Umfeld des Kraftfahrzeugs (23, 31) übertragen und dort zur Korrektur von Positionsdaten eines dortigen Positionssensors (34) verwendet werden.

13. Verfahren nach einem der vorangehenden Ansprüche,
**dadurch gekennzeichnet,**
**dass** die Messdaten vor einem Detektionsvorgang gefiltert werden, insbesondere zur Schärfung einer von einer Referenzstruktur (6, 7, 9, 10, 12, 15, 17, 20, 21) erzeugten Datensignatur.

14. Verfahren nach einem der vorangehenden Ansprüche,
**dadurch gekennzeichnet,**
**dass** innerhalb vordefinierter Nachbarschaftsbereiche in unterschiedlichen Richtungen, insbesondere zueinander senkrechten Richtungen, verlaufende Referenzstrukturen (6, 7, 9, 10, 20, 21) verwendet werden.

15. Verfahren nach einem der vorangehenden Ansprüche,
**dadurch gekennzeichnet,**
**dass** zur Bestimmung einer Position des Kraftfahrzeugs (23, 31) in Verlaufsrichtung einer Referenzstruktur (6, 7, 9, 10, 12, 15, 17, 20, 21) durch wenigstens einen optischen Sensor aufgenommene Optikdaten eines in einer bekannten Positionsbeziehung zu der Referenzstruktur (6, 7, 9, 10, 12, 15, 17, 20, 21), insbesondere eines Ortes auf der Referenzstruktur (6, 7, 9, 10, 12, 15, 17, 20, 21) in deren Verlaufsrichtung, stehenden optisch detektierbaren Objekts zum Zeitpunkt des Überfahrens der Referenzstruktur (6, 7, 9, 10, 12, 15, 17, 20, 21) berücksichtigt wird.

16. Verfahren nach einem der vorangehenden Ansprüche,
**dadurch gekennzeichnet,**
**dass** als Referenzstruktur (6, 7, 9, 10, 12, 15, 17, 20, 21) eine Anordnung von Querrillen in der Fahrbahnoberfläche verwendet wird.

17. Kraftfahrzeug (23, 31), umfassend einen Positionssensor (34), einen Struktursensor (32) und ein zur Durchführung eines Verfahrens nach einem der vorangehenden Ansprüche ausgebildetes Steuergerät (33).

## Claims

1. Method for correcting position data recorded using a position sensor (34), which uses a global navigation satellite system, of a motor vehicle (23, 31), wherein the mechanical interaction of the motor vehicle (23, 31) with ground structures as it travels over the ground structures is measured by means of a structure sensor (32), and evaluation of the measurement data from the structure sensor (32) detects travel over at least one reference structure (6, 7, 9, 10, 12, 15, 17, 20, 21) for which the precise reference position in the geodetic coordinate system of the global navigation satellite system in at least one direction is known, wherein a discrepancy between the position data measured using the position sensor (34) at the instant of travel over the ground structure and the reference position is used to ascertain correction data that can be used for correction,
**characterised in**
**that** at least one ground structure generated specifically as a reference structure (6, 7, 9, 10, 20, 21) is used, which generates a data signature in the measurement data, into which at least one piece of information about the reference structure is encoded.

2. Method according to claim 1,
**characterised in**
**that** a structure-borne noise sensor and/or an acceleration sensor and/or a microphone and/or a spring travel sensor is used as the structure sensor (32).

3. Method according to claim 1 or 2,
**characterised in**
**that** a detection of a reference structure (6, 7, 9, 10, 12, 15, 17, 20, 21) is only carried out if the position data of the motor vehicle (23, 31) indicate that the motor vehicle (23, 31) is in a close range around the reference structure (6, 7, 9, 10, 12, 15, 17, 20, 21).

4. Method according to any one of the preceding claims
**characterised in**
**that** structure data describing the reference structure (6, 7, 9, 10, 12, 15, 17, 20, 21) and a reference position assigned to the reference structure are determined, in particular from digital map material of a navigation system (35) of the motor vehicle (23, 31) and/or from communication data received from a motor vehicle-to-X communication device (36) and/or from a motor vehicle internal database.

5. Method according to claim 4,
**characterised in**
**that** the structure data are taken into account in the measurement data when detecting the reference structure (6, 7, 9, 10, 12, 15, 17, 20, 21).

6. Method according to claim 5,
**characterised in**
**that** the structure data comprise signature data and/or assignment data to a class of reference structures (6, 7, 9, 10, 12, 15, 17, 20, 21), wherein class-specific signature data are assigned to each class, wherein the signature data are compared with measurement data for detection of the reference structure (6, 7, 9, 10, 12, 15, 17, 20, 21).

7. Method according to claim 5 or 6,
**characterised in**
**that** structure data are used for multiple speeds, wherein the structure data relating to the speed of the motor vehicle (23, 31) when travelling over the ground structures to be tested are taken into account in the detection, and/or speed-independent data signatures are derived from the structure data and the measurement data and compared.

8. Method according to any one of claims 4 to 7,
**characterised in**
**that** the structure data are determined from the measurement data of several motor vehicles (23, 31) relating to the reference structure (6, 7, 9, 10, 12, 15, 17, 20, 21), in particular by statistical averaging.

9. Method according to any one of claims 4 to 8,
**characterised in**
**that** the reference position is determined by averaging uncorrected position data from a plurality of motor vehicles (23, 31) when travelling over the reference structure (6, 7, 9, 10, 12, 15, 17, 20, 21).

10. Method according to claim 8 or 9,
**characterised in**
**that** measurement data and/or position data and/or data derived therefrom of several motor vehicles (23, 31) measured when travelling over a reference structure (6, 7, 9, 10, 12, 15, 17, 20, 21), are transmitted to an infrastructure device via vehicle-to-X-communication for evaluation, in particular for the modification of structure data and/or of the reference position.

11. Method according to any one of claims 4 to 10,
**characterised in**
**that** for determining reference structures (6, 7, 9, 10, 12, 15, 17, 20, 21), measurement data and position data of several motor vehicles (23, 31) relating to a ground structure that meets at least one selection criterion are transmitted to a or the infrastructure device, where they are evaluated to determine structure data and a reference position according to an evaluation with respect to at least one suitability criterion for each ground structure.

12. Method according to any one of the preceding claims,
**characterised in**
**that** the correction data are transmitted to other motor vehicles (23, 31) in the vicinity of the motor vehicle (23, 31) via vehicle-to-vehicle communication and are used there to correct position data of a position sensor (34) located there.

13. Method according to any one of the preceding claims,
**characterised in**
**that** the measurement data are filtered before a detection process, in particular for sharpening a data signature generated by a reference structure (6, 7, 9, 10, 12, 15, 17, 20, 21).

14. Method according to any one of the preceding claims,
**characterised in**
**that** reference structures (6, 7, 9, 10, 20, 21) extending in different directions, in particular directions perpendicular to one another, are used within predefined proximity ranges.

15. Method according to any one of the preceding claims,
**characterised in**
**that** for determining a position of the motor vehicle (23, 31) in the direction of extent of a reference structure (6, 7, 9, 10, 12, 15, 17, 20, 21) optical data, recorded by at least one optical sensor, of an optically detectable object located in a known positional relationship to the reference structure (6, 7, 9, 10, 12, 15, 17, 20, 21), in particular of a location on the reference structure (6, 7, 9, 10, 12, 15, 17, 20, 21) in its direction of extent, are taken into consideration at the time that the vehicle travels over the reference structure (6, 7, 9, 10, 12, 15, 17, 20, 21).

16. Method according to any one of the preceding claims,
**characterised in**
**that** an arrangement of transverse grooves in the road surface is used as the reference structure (6, 7, 9, 10, 12, 15, 17, 20, 21).

17. Motor vehicle (23, 31) comprising a position sensor (34), a structure sensor (32) and a control apparatus (33) designed to carry out a method according to any one of the preceding claims.

## Revendications

1. Procédé de correction de données de position enregistrées par un capteur de position (34) d'un véhicule automobile (23, 31) utilisant un système global de navigation par satellite, dans lequel l'interaction mécanique du véhicule (23, 31) avec des structures au sol est mesurée lors du franchissement des structures au sol au moyen d'un capteur de structure (32) et le franchissement d'au moins une structure de référence (6, 7, 9, 10, 12, 15, 17, 20, 21) pour laquelle la position de référence exacte dans le système de coordonnées géodésique du système global de navigation par satellite dans au moins une direction est connue, est détecté par l'analyse des données de mesure du capteur de structure (32), dans lequel à partir d'un écart des données de position par rapport à la position de référence, mesurées par le capteur de position (34) au moment du franchissement, les données de correction à utiliser pour la correction sont déterminées,
**caractérisé en ce que**
l'au moins une structure de sol générée spécifiquement en tant que structure de référence (6, 7, 9, 10, 20, 21) est utilisée, laquelle génère dans les données de mesure une signature de données dans laquelle au moins une information sur la structure de référence est codée.

2. Procédé selon la revendication 1,
**caractérisé en ce que**
un capteur de bruit de structure et/ou un capteur d'accélération et/ou un microphone et/ou un capteur de course de ressort est/sont utilisé(s) comme capteur de structure (32).

3. Procédé selon la revendication 1 ou 2,
**caractérisé en ce que**
une détection d'une structure de référence (6, 7, 9, 10, 12, 15, 17, 20, 21) n'est réalisée que lorsque les données de position du véhicule automobile (23, 31) indiquent que le véhicule automobile (23, 31) se trouve à proximité de la structure de référence (6, 7, 9, 10, 12, 15, 17, 20, 21).

4. Procédé selon l'une quelconque des revendications précédentes,
**caractérisé en ce que**
les données de structure décrivant la structure de référence (6, 7, 9, 10, 12, 15, 17, 20, 21) et une position de référence attribuée à la structure de référence sont déterminées, en particulier à partir de cartes numériques d'un système de navigation (35) du véhicule automobile (23, 31) et/ou à partir de données de communication reçues par un dispositif de communication d'un véhicule automobile avec X (36) et/ou à partir d'une banque de données interne au véhicule automobile.

5. Procédé selon la revendication 4,
**caractérisé en ce que** les données de structure sont prises en compte dans les données de mesure lors de la détection de la structure de référence (6, 7, 9, 10, 12, 15, 17, 20, 21).

6. Procédé selon la revendication 5,
**caractérisé en ce que**
les données de structure comprennent des données de structure et/ou des données d'attribution à une classe de structures de référence (6, 7, 9, 10, 12, 15, 17, 20, 21), dans lequel des données de signature spécifiques d'une classe sont attribuées à chaque classe, dans lequel pour la détection de la structure de référence (6, 7, 9, 10, 12, 15, 17, 20, 21) les données de signature sont comparées aux données de mesure.

7. Procédé selon la revendication 5 ou 6,
**caractérisé en ce que**
des données de structure sont utilisées pour plusieurs vitesses, dans lequel lors de la détection, les données de structure se rapportant à la vitesse du véhicule automobile (23, 31) lors du franchissement des structures de sol à vérifier sont prises en compte, et/ou des signatures de données indépendantes de la vitesse sont dérivées des données de structure et des données de mesure et comparées.

8. Procédé selon l'une quelconque des revendications 4 à 7,
**caractérisé en ce que**
les données de structure sont déterminées à partir de données de mesure concernant la structure de référence (6, 7, 9, 10, 12, 15, 17, 20, 21) de plusieurs véhicules automobiles (23, 31), en particulier par un calcul d'une moyenne statistique.

9. Procédé selon l'une quelconque des revendications 4 à 8,
**caractérisé en ce que**
la position de référence est déterminée par un calcul de moyenne de données de position non corrigées de plusieurs véhicules automobiles (23, 31) lors d'un franchissement de la structure de référence (6, 7, 9, 10, 12, 15, 17, 20, 21).

10. Procédé selon la revendication 8 ou 9,
**caractérisé en ce que**
des données de mesure et/ou des données de position mesurées lors du franchissement d'une structure de référence (6, 7, 9, 10, 12, 15, 17, 20, 21) et/ou des données de plusieurs véhicules automobile (23, 31) qui en sont dérivées sont transmises par le biais d'une communication d'un véhicule automobile avec X pour analyse, en particulier pour la modification de données de structure et/ou de la position de référence, à un dispositif d'infrastructure.

11. Procédé selon l'une quelconque des revendications 4 à 10,
**caractérisé en ce que**
pour la détermination de structures de référence (6, 7, 9, 10, 12, 15, 17, 20, 21), des données de mesures se rapportant à une structure de sol répondant à au moins un critère de sélection et des données de position de plusieurs véhicules automobiles (23, 31) sont transmises à un ou au dispositif d'infrastructure, où elles sont analysées après une évaluation relative à au moins un critère de conformité pour chaque structure de sol pour la détermination de données de structure et d'une position de référence.

12. Procédé selon l'une quelconque des revendications précédentes,
**caractérisé en ce que**
les données de correction sont transmises par le biais d'une communication de véhicule automobile à véhicule automobile à d'autres véhicules automobiles (23, 31) dans l'environnement du véhicule automobile (23, 31) et y sont utilisées pour la correction de données de position d'un capteur de position qui s'y trouve (34).

13. Procédé selon l'une quelconque des revendications précédentes,
**caractérisé en ce que**
les données de mesure sont filtrées avant un processus de détection, en particulier pour affiner une signature de donnée générée par une structure de référence (6, 7, 9, 10, 12, 15, 17, 20, 21).

14. Procédé selon l'une quelconque des revendications précédentes,
**caractérisé en ce que**
des structures de références (6, 7, 9, 10, 20, 21) se trouvant à l'intérieur de voisinages prédéfinis dans des directions différentes, en particulier des directions perpendiculaires les unes par rapport aux autres, sont utilisées.

15. Procédé selon l'une quelconque des revendications précédentes,
**caractérisé en ce que**
pour la détermination d'une position du véhicule automobile (23, 31) dans une direction d'évolution d'une structure de référence (6, 7, 9, 10, 12, 15, 17, 20, 21), des données optiques enregistrées par au moins un capteur optique d'un objet pouvant être détecté optiquement se trouvant dans un rapport de position connu par rapport à la structure de référence (6, 7, 9, 10, 12, 15, 17, 20, 21), en particulier d'un lieu sur la structure de référence (6, 7, 9, 10, 12, 15, 17, 20, 21) dans sa direction d'évolution au moment du franchissement de la structure de référence (6, 7, 9, 10, 12, 15, 17, 20, 21) sont prises en compte.

16. Procédé selon l'une quelconque des revendications précédentes,
**caractérisé en ce que**
un agencement de rainures transversales dans la surface routière est utilisé comme structure de référence (6, 7, 9, 10, 12, 15, 17, 20, 21).

17. Véhicule automobile (23, 31), comprenant un capteur de position (34), un capteur de structure (32) et un appareil de commande (33) conçu pour la réalisation d'un procédé selon l'une quelconque des revendications précédentes.
